# EUROPÄISCHE PATENTSCHRIFT

(11) **EP 3 873 758 B1**
(45) Veröffentlichungstag und Bekanntmachung des Hinweises auf die Patenterteilung: **26.04.2023**
(21) Anmeldenummer: 19790193.7
(22) Anmeldetag: 17.10.2019
(51) Int. Cl.: B60K 11/04, B60K 11/08

(54) **ANORDNUNG EINES LUFTFÜHRUNGSELEMENTES AUS SCHAUMSTOFF AN EINEM KÜHLERELEMENT SOWIE KÜHLERELEMENT UND LUFTFÜHRUNGSELEMENT AUS SCHAUMSTOFF**
ARRANGEMENT OF AN AIR GUIDING ELEMENT MADE OF FOAM ON A COOLER ELEMENT, AND COOLER ELEMENT AND AIR GUIDING ELEMENT MADE OF FOAM
AGENCEMENT D'UN ÉLÉMENT DE GUIDAGE D'AIR EN MOUSSE SUR UN ÉLÉMENT RADIATEUR ET ÉLÉMENT RADIATEUR ET ÉLÉMENT DE GUIDAGE D'AIR EN MOUSSE

(30) Priorität: 30.10.2018 DE 102018218520
(43) Veröffentlichungstag der Anmeldung: 08.09.2021
(73) Patentinhaber: VOLKSWAGEN AKTIENGESELLSCHAFT, 38440 Wolfsburg (DE)
(72) Erfinder: MERZ, Thorsten Tobias, 38165 Lehre (Flechtorf) (DE); SCHORN, Tomas, 38446 Wolfsburg (DE); IPPOLITI, Mario, 38444 Wolfsburg (DE)
(86) Internationale Anmeldenummer: PCT/EP2019/078239
(87) Internationale Veröffentlichungsnummer: WO 2020/088947

(56) Entgegenhaltungen:
- FR-A1- 2 553 826
- FR-A1- 3 013 302
- JP-A- 2007 326 431
- US-A1- 2001 027 883
- US-A1- 2017 204 773

## Beschreibung

Die Erfindung betrifft eine Anordnung eines Luftführungselementes aus Schaumstoff an einem Kühlerelement in einem Vorderwagen eines Kraftfahrzeuges.

Aus DE 198 31 256 A1 ist eine Halterung für einen Wärmeübertrager von Kraftfahrzeugen bekannt, wobei der Wärmeübertrager ein Ladeluftkühler, ein Kondensator oder ein Ölkühler sein kann. Die Halterung umfasst einen Rahmen, welcher einen sich vom Kühler zu einer Lufteinlassöffnung erstreckenden Luftleitrahmen bildet. Der Rahmen kann als geschäumtes Formteil aus thermoplastischen Schaumstoffpartikeln ausgebildet sein. Der Wärmeübertrager ist in den Rahmen einschiebbar. Dazu umfasst der Rahmen zwei voneinander beabstandete Seitenschenkel, in deren Innenseiten als Nuten ausgebildete Führungen vorgesehen sind, um den Wärmeübertrager schubladenartig einschieben zu können und diesen zwischen den zwei Seitenschenkeln des Rahmens zu halten. Die Nuten sollen dabei eine für die Anwendung hinreichende Dichtheit gewährleisten, ohne dass ein Dichtmittel zwischen dem Rahmen und dem Wärmeübertrager notwendig ist.

Aus DE 11 2015 002 049 B4 ist eine Luftführung für ein Kraftfahrzeug bekannt, wobei die Luftführung einen Rahmen mit zwei Öffnungen aufweist. Die Luftführung kann aus Polypropylen gebildet sein. Die erste Öffnung ist für den Einlass eines von außerhalb des Kraftfahrzeuges stammenden Luftstroms und die zweite Öffnung ist für die Führung des Luftstromes zu einem Luftfiltergehäuse vorgesehen. Mit der Luftführung oder dem Luftfiltergehäuse einstückig ausgebildet ist eine Dichtung, welche die Abdichtung zwischen dem Luftfiltergehäuse und der Luftführung bewirken soll. Die Dichtung ist insbesondere in Form eines Balgs ausgebildet.

Aus DE 10 2009 031 746 A1 ist eine Kühlluftführungseinrichtung mit einer ersten Führungskomponente und einer zweiten Führungskomponente bekannt, wobei die zweite Führungskomponente ein im Vergleich zur ersten Führungskomponente leichter deformierbares Material aufweist. Insbesondere sind die erste Führungskomponente und die zweite Führungskomponente als Kunststoff-Spritzgussteile ausgebildet. Zwischen einem Wasserkühler und der zweiten Führungskomponente ist insbesondere eine umlaufende Dichtung angeordnet, welche mit einem führungskomponentenseitigen Flanschabschnitt zur Anlage gebracht ist.

Aus DE 10 2016 117 058 A1 ist eine mehrteilige Luftführung für ein Kraftfahrzeug bekannt, wobei die Luftführung ein unteres Schaumteil, ein oberes Schaumteil und das untere und obere Schaumteil verbindende seitliche Spritzgussteile aufweist. Das obere Schaumteil soll dabei so geformt sein, dass die Luftführung äußerlich an einem Kühler anliegt.

Aus FR 3 013 302 A1 ist eine einteilige Luftführung bekannt, die in einem Vorderwagen eines Kraftfahrzeuges zwischen einem Montageträger und einer mit mindestens einer Belüftungsöffnung versehenen Fahrzeugfrontseite angeordnet ist. Das Luftführungselement ist einstückig aus einem Polymermaterial gebildet, und es weist eine Vorderseite sowie eine Rückseite auf, zwischen welchen ein Kanal gebildet ist. An der Vorderseite ist ein Querträger-Aufnahmebereich mit einer Vertiefung zur Aufnahme eines Querträgers vorgesehen. Auf der Rückseite ist ein Befestigungsbereich zur Befestigung an dem Montageträger vorgesehen. Der Montageträger ist mittels in Längsrichtung komprimierbaren Elementen mit dem Querträger verbunden. Im montierten Zustand der Luftführung und des Montageträgers ist ein Kühler von der Luftführung und dem Montageträger umgeben und die Luftführung leitet Luft von der Belüftungsöffnung zu dem Kühler.

Aus US 2017/0204773 A1 ist eine Wärmetauscheranordnung mit einer Trägerstruktur, einem Wärmetauscher und einer Luftführung bekannt. Der Wärmetauscher ist an der Trägerstruktur befestigt, so dass der Wärmetauscher und die Trägerstruktur einen Spalt definieren. Dabei ist die Luftführung so in dem Spalt angeordnet, dass ein Luftstrom zu dem Wärmetauscher geleitet wird. Die Luftführung weist ein nahes Ende und ein entferntes Ende auf, wobei das nahe Ende mit der Stützstruktur oder dem Wärmetauscher verbunden ist. Das entfernte Ende und das nahe Ende sind mit einem flexiblen Gelenk verbunden. Das Gelenk kann in sich vorgespannt sein, um das entfernte Ende in einen Kontakt mit einer Außenfläche des Wärmetauschers zu drücken.

Aus JP 2007 326431 A ist eine zwischen einem Stoßstangenelement eines Fahrzeugs und Wärmetauschern angeordnete Luftführung bekannt. Die Luftführung ist um einen ersten Raum herum gebildet, der sich stromaufwärts der Wärmetauscher befindet, so dass der erste Raum von einem zweiten Raum, der den ersten Raum in Richtung der Fahrzeugbreite umgibt, getrennt ist. Ein stromaufwärtiges Endteil der Luftführung ist mit dem Stoßstangenelement in Kontakt. Ein stromabwärtiges Endteil wird von einer die Wärmetauscher aufweisenden Kühleinrichtung getragen. Die Luftführung besteht aus einem einzigen Material und ist mit einem ebenen Dichtungselement versehen, das den ersten Raum vom zweiten Raum abdichtet. In dem Dichtungselement ist ein eine in Längsrichtung des Fahrzeugs orientierte Verschiebung aufnehmendes Element vorgesehen.

Der Erfindung liegt die Aufgabe zugrunde, eine Anordnung eines Luftführungselementes aus Schaumstoff an einem Kühlerelement sowie ein Kühlerelement und ein Luftführungselement aus Schaumstoff zur Verfügung zu stellen, die funktional verbessert sind.

Die Lösung der Aufgabe erfolgt erfindungsgemäß mit den Merkmalen des unabhängigen Anspruchs 1.

Weitere praktische Ausführungsformen und Vorteile der Erfindung sind in Verbindung mit den abhängigen Ansprüchen beschrieben.

Die Erfindung betrifft eine Anordnung eines Luftführungselementes aus Schaumstoff an einem Kühlerelement in einem Vorderwagen eines Kraftfahrzeuges. Das Luftführungselement erstreckt sich dabei insbesondere rahmenartig als offener oder geschlossener Rahmen von einem Lufteintritt im Bereich eines Gitters (insbesondere eines Kühlerschutzgitters und/oder eines Lüftungsgitters in einer Stoßfängerabdeckung) in dem Vorderwagen eines Kraftfahrzeuges in Fahrzeuglängsrichtung betrachtet nach hinten bis zu dem Kühlerelement, wobei es den Bereich zwischen dem Gitter und dem Kühlerelement derart dichtend umschließt, dass der gesamte oder ein Großteil des durch das Gitter einströmenden Luftstromes zu dem Kühlerelement gelangt. Einem seitlichen Vorbeiströmen von Luft an dem Luftführungselement und/oder an dem Kühlerelement wird mit dem Luftführungselement somit entgegengewirkt. Das Luftführungselement ist aus Schaumstoff gebildet, insbesondere aus expandierten Polypropylen-Schaumstoff (EPP-Schaum). Der Werkstoff weist insbesondere eine Dichte von mindestens 30 g/l auf, wobei Werte zwischen 30 g/l und 60 g/l besonders bevorzugt sind, und besonderes bevorzugt Werte zwischen 35 g/l und 50 g/l. Ebenfalls bevorzugt ist das Luftführungselement einstückig ausgebildet. Luftführungselemente aus Schaumstoff weisen ein geringes Bauteilgewicht auf und sind damit besonders für einen Einsatz in Elektrofahrzeugen besonders gut geeignet, insbesondere im Hinblick auf eine Reichweitenoptimierung.

Unter einem Kühlerelement wird vorliegend insbesondere ein Element eines in einem Vorderwagen angeordneten Klima-Kühlerpakets verstanden. Dieses umfasst insbesondere einen Wasserkühler, einen Kondensator, ein Kühlerrollo und/oder eine Lüfterhutze. Vorzugsweise umfasst das Kühlerelement zumindest einen Wasserkühler.

Das Kühlerelement weist mindestens in einem äußeren Teilabschnitt, insbesondere an seinem Umfang und insbesondere an einem das Kühlerelement außenseitig umschließenden Rahmen, eine elastische Dichtung mit einem ersten Dichtabschnitt auf. Die Dichtung ist insbesondere aus Gummi gebildet, vorzugsweise aus EPDM. Das Luftführungselement liegt erfindungsgemäß derart an dem ersten Dichtabschnitt an, dass der erste Dichtabschnitt durch das Luftführungselement in eine in Fahrzeuglängsrichtung betrachtet nach hinten gespannte Lage gebracht ist.

Mit anderen Worten wird durch das Luftführungselement der erste Dichtabschnitt der Dichtung in einer End-Montagelage gegenüber einer Vor-Montagelage nach hinten gespannt. Mit einer nach hinten gespannten Lage soll nicht zwangsweise gemeint sein, dass die Dichtung in Fahrzeuglängsrichtung betrachtet ausgehend von dem Kühlerelement in Fahrzeuglängsrichtung nach hinten orientiert ist, sondern lediglich die relative Position des ersten Dichtabschnitts der elastischen Dichtung der End-Montagelage gegenüber einer Vor-Montagelage durch Zusammenwirken mit dem Luftführungselement. Wie nachfolgend noch in Zusammenhang mit dem Kühlerelement beschrieben wird, erstreckt sich der erste Dichtabschnitt in einer Vor-Montagelage insbesondere teilweise in Fahrzeuglängsrichtung nach vorne.

Durch die mittels des Luftführungselementes erzeugte Spannung des ersten Dichtabschnitts liegt dieser vollflächig und sicher an dem Luftführungselement an. Gleichzeitig ermöglicht der elastische, unter Spannung stehende erste Dichtabschnitt der ersten Dichtung eine Schwingungsentkopplung zwischen dem Luftführungselement und dem Kühlerelement. Dies ist insbesondere dann von Vorteil, wenn das Kühlerelement schwingend in dem Vorderwagen gelagert ist. Die durch das Kühlerelement strömenden Medien (beispielsweise Kühlmittel) sowie ein Kühlerlüfter können in Schwingungen gebracht und damit das Kühlerelement selbst zum Schwingen angeregt werden. Derartige Schwingungen können sowohl vom Fahrbetrieb als auch durch die Mediendurchströmung und/oder den Kühlerlüfterlauf verursacht werden. Hinsichtlich des Kühlerlüfters ist ferner zu berücksichtigen, dass dieser vollständig ausgeschaltet oder auch mit unterschiedlichen Drehzahlen betreibbar sein kann. Dies führt wiederum zu unterschiedlichen Schwingungsanregungen und zum Erfordernis besonderer Maßnahmen hinsichtlich einer schwingenden Lagerung des Klima-Kühlerpakets. Aus diesen Gründen ist das gesamte Klima-Kühlerpaket schwingend gelagert, also entkoppelt von der Karosserie des Fahrzeuges. Diese Schwingungen werden aufgrund der erfindungsgemäßen Gestaltung nicht oder nur in geringem Maße von dem Kühlerelement auf das Luftführungselement bzw. die Karosserie übertragen, und somit wird eine unerwünschte Geräuschbildung vermieden.

In einer praktischen Ausführungsform der erfindungsgemäßen Anordnung weist das Kühlerelement einen weiteren Teilabschnitt mit einer zweiten Dichtung oder einem zweiten Dichtabschnitt auf und das Luftführungselement liegt derart an der zweiten Dichtung oder dem zweiten Dichtabschnitt an, dass die zweite Dichtung oder der zweite Dichtabschnitt gegenüber einem weiteren Bauteil mindestens kraftschlüssig fixiert ist. Die zweite Dichtung bzw. der zweite Dichtabschnitt erstreckt sich insbesondere ausgehend von dem Kühlerelement nur in Fahrzeughochrichtung oder nur in Fahrzeuglängsrichtung oder nur in Fahrzeugquerrichtung. Eine solche zweite Dichtung bzw. ein solcher zweiter Dichtabschnitt kann insbesondere bei geringem Bauraum zum Einsatz kommen, wenn ein nach hinten Spannen durch das Luftführungselement aus Platzmangel nicht möglich ist. Durch die kraftschlüssige Fixierung wird aber auch im Bereich der zweiten Dichtung bzw. des zweiten Dichtabschnitts eine gute Abdichtung zwischen dem Luftführungselement und dem Kühlerelement bewirkt. Die kraftschlüssige Fixierung erfolgt insbesondere dadurch, dass das Luftführungselement die zweite Dichtung bzw. den zweiten Dichtabschnitt gegenüber einem weiteren, im Vorderwagen angeordneten Bauteil fixiert, beispielsweise gegenüber einem Element einer Unterbodenverkleidung,.

Wie bereits vorstehend erwähnt, ist es vorteilhaft, wenn das Kühlerelement schwingungsentkoppelt von karosseriefesten Bauteilen in dem Vorderwagen gelagert ist. Insbesondere derart, dass bei bestimmungsgemäßer Benutzung des Fahrzeuges die Dichtheit zwischen dem Kühlerelement und dem Luftführungselement auch während des Schwingens des Kühlerelements bzw. bei einer Relativbewegung des Kühlerelements und des Luftführungselementes nicht beeinträchtigt ist. Dazu kann das Kühlerelement insbesondere zumindest teilweise von einem Rahmen umgeben sein, welcher über elastische und/oder dämpfende Verbindungselemente mittelbar mit karosseriefesten Bauteilen verbunden ist und so schwingungstechnisch von karosseriefesten Bauteilen und insbesondere dem Crashmanagementsystem entkoppelt ist. Die Verbindungselemente sind vorzugsweise aus einem Elastomer hergestellt.

Die Erfindung betrifft auch eine wie vorstehend beschriebene Anordnung, wobei in dem Vorderwagen ein Schallerzeuger angeordnet ist und in dem Luftführungselement eine das Luftführungselement durchragende Öffnung ausgebildet ist. Die Öffnung schließt sich dabei derart unmittelbar an den Schallerzeuger an, dass sich Schall von einem außenseitigen Bereich des Luftführungselementes in einen innenseitigen Bereich des Luftführungselementes ausbreiten kann. Bei dem Schallerzeuger handelt es sich insbesondere um einem Lautsprecher einer sogenannten "Soundbox", welche bei Elektrofahrzeugen zur Imitation von Fahrgeräuschen bei niedrigen Geschwindigkeiten eingesetzt wird, insbesondere in einem Geschwindigkeitsbereich von 0 km/h bis 30 km/h, in welchem bei rein elektrisch betriebenen Fahrzeugen nahezu keine Geräusche wahrnehmbar sind, insbesondere weil nahezu keine Abrollgeräusche entstehen. Der Schallerzeuger ist vorzugsweise zumindest teilweise in Fahrzeughochrichtung und in Fahrzeugquerrichtung außerhalb des Luftführungselementes angeordnet und befindet sich damit außerhalb des Strömungsquerschnittes für die vom Gitter in Richtung des Kühlerelements strömende Luft.

Zur gezielten Emittierung der Imitationsgeräusche sind der Schallerzeuger und/oder die Öffnung derart angeordnet und/oder ausgebildet, dass der Schall zumindest teilweise in Fahrzeuglängsrichtung nach vorne aus der Öffnung emittiert wird. Alternativ oder in Ergänzung dazu ist die Öffnung trichterförmig ausgebildet. Eine trichterförmig ausgebildete Öffnung weitet sich vorzugsweise von einem außenseitigen Bereich des Luftführungselementes in Richtung eines innenseitigen Bereichs des Luftführungselementes auf, so dass der emittierte Schall breit gestreut wird.

In einer weiteren praktischen Ausführungsform der erfindungsgemäßen Anordnung ist der Schallerzeuger dichtend derart gegenüber dem Luftführungselement angeordnet, dass der Schall vollständig oder weitestgehend durch die Öffnung emittiert wird. Somit wird der Schall zum einen besonders effizient in Richtung der Fahrzeugmitte bzw. der Fahrzeugfront geleitet. Zum anderen wird aber auch bewirkt, dass möglichst wenig Luft, welche vom Gitter in Richtung des Kühlerelements strömt, im Bereich des Schallerzeugers entweichen kann.

Um Beschädigungen am Kühlerelement und insbesondere an dem Wasserkühler möglichst zu vermeiden, sind der Schallerzeuger und das Kühlerelement, in Fahrzeuglängsrichtung betrachtet, in Fahrzeugquerrichtung überschneidungsfrei nebeneinander angeordnet sind. In diesem Fall kann der Schallerzeuger bei einer - beispielsweise crashbedingten - Relativbewegung in Fahrzeuglängsrichtung kollisionsfrei an dem Kühlerelement vorbeigleiten, wodurch eine Beschädigung des Kühlerelements vermieden wird. Insbesondere können damit Beschädigungen am Kühlerelement möglichst vermieden werden, wodurch auf in der Regel teure und aufwändige Reparaturen des Kühlerelements verzichtet werden kann.

Das Kühlerelement weist mindestens in einem Teilabschnitt seines Umfangs eine elastische Dichtung auf, welche in unbelastetem Zustand, d.h. in einer Vor-Montagelage, zumindest teilweise in Fahrzeuglängsrichtung betrachtet nach vorne orientiert ist und insbesondere derart gestaltet ist, dass diese durch geeignete Krafteinwirkung - wie in einer End-Montagelage mit einem Luftführungselement - in eine gespannte Lage bringbar ist. Bei dem Kühlerelement handelt es sich insbesondere um einen Teil eines Klima-Kühlerpakets und insbesondere zumindest mit einem Wasserkühler. Die elastische Dichtung ist vorzugsweise an einem das Kühlerelement an seinem Umfang umgebenden Rahmen angeordnet und weiter vorzugsweise an diesem angespritzt. Der Rahmen kann aus einem Kunststoff hergestellt und in einfacher Weise mit dem Kühlerelement durch Verclipsen montiert sein.

Der Teilabschnitt mit der Dichtung erstreckt sich vorzugsweise über mindestens zwei Seiten des Kühlerelements und insbesondere u-förmig um das Kühlerelement, wobei die Dichtung an einer Oberseite des Kühlerelements und an den sich in Fahrzeughochrichtung erstreckenden Seiten angeordnet ist. Das Kühlerelement kann zudem in einem weiteren Teilabschnitt eine zweite Dichtung bzw. einen zweiten Dichtabschnitt aufweisen, welcher an der Unterseite des Kühlerelements angeordnet ist und sich ausgehend von dem Kühlerelement in Fahrzeuglängsrichtung nach vorne erstreckt.

Wenn die Anordnung das Luftführungselement aus Schaumstoff mit der das Luftführungselement durchragenden Öffnung aufweist, kann sich die Öffnung ausgehend von einem außenseitigen Bereich des Luftführungselementes trichterförmig in Richtung eines innenseitigen Bereiches des Luftführungselementes aufweiten und/oder die Öffnung zumindest in dem in Richtung des innenseitigen Bereiches gerichteten Abschnitt in Richtung Fahrzeugfront orientiert sein. Ein derartiges Luftführungselement ist wie vorstehend beschrieben bevorzugt zusammen mit einem Schallerzeuger in einem Vorderwagen angeordnet, so dass die Öffnung den von dem Schallerzeuger erzeugten Schall in die Fahrzeugmitte und in Fahrzeuglängsrichtung betrachtet vorne leitet, so dass andere Verkehrsteilnehmer das Kraftfahrzeug frühzeitig wahrnehmen können.

Weitere praktische Ausführungsformen der Erfindung sind nachfolgend im Zusammenhang mit den Zeichnungen beschrieben. Es zeigen:
- Fig. 1: ein Kraftfahrzeug in einer Seitenansicht,
- Fig. 2: eine erfindungsgemäße Anordnung eines Luftführungselements und eines Kühlerelements in einem Vorderwagen in einer perspektivischen Ansicht von schräg vorne,
- Fig. 3: das Luftführungselement aus Fig. 2 in einer perspektivischen Ansicht von schräg vorne,
- Fig. 4: ein Klima-Kühlerpaket mit dem Kühlerelement aus Fig. 2 in einer perspektivischen Ansicht von schräg vorne,
- Fig. 5: die erfindungsgemäße Anordnung aus Fig. 2 mit einer Außenhaut in einem Schnitt gemäß Linie V-V aus Fig. 2,
- Fig. 6: die erfindungsgemäße Anordnung aus Fig. 2 in einem Schnitt gemäß Linie VI-VI aus Fig. 2,
- Fig. 7: den mit VII gekennzeichneten Bereich aus Fig. 5 in einer vergrößerten Darstellung in einer ersten Ausführungsform,
- Fig. 8: den mit VII gekennzeichneten Bereich aus Fig. 5 in einer vergrößerten Darstellung in einer zweiten Ausführungsform und
- Fig. 9: den mit IX gekennzeichneten Bereich aus Fig. 2 in einer vergrößerten Darstellung.

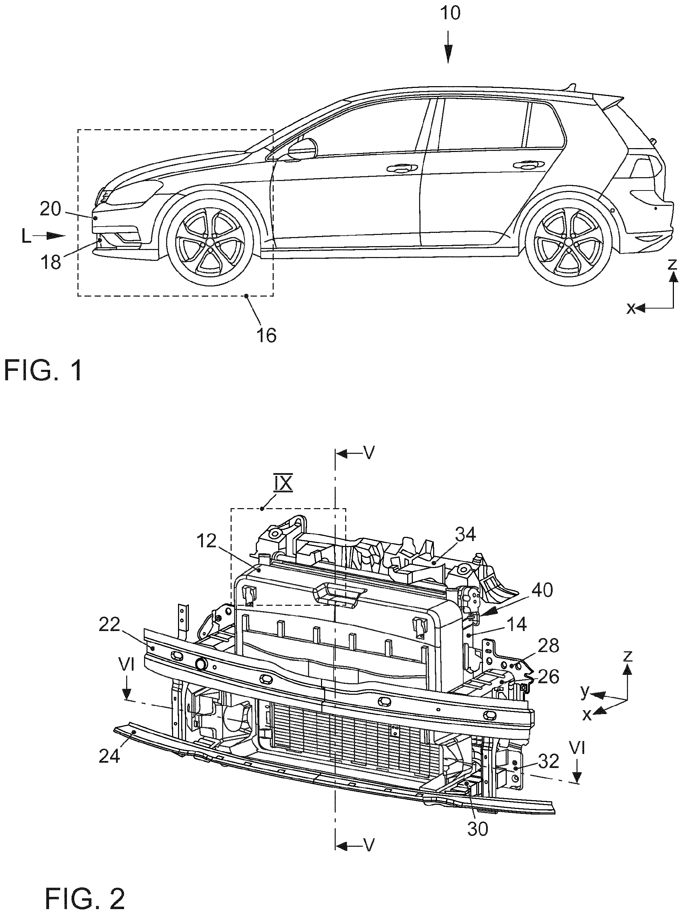

In Fig. 1 ist ein Kraftfahrzeug 10 in einer Seitenansicht dargestellt. Eine erfindungsgemäße Anordnung mit einem Luftführungselement 12 und einem Kühlerelement 14 ist innerhalb eines gestrichelt gekennzeichneten Vorderwagens 16 des Kraftfahrzeuges 10 angeordnet. Das Luftführungselement 12 erstreckt sich dabei in dem Vorderwagen 16 von einem Gitter (insbesondere eines wie in Fig. 1 gezeigten Kühlerschutzgitters 18 oder alternativ eines Lüftungsgitters), welches Teil einer Außenhaut 20 des Fahrzeuges 10 ist, bis zu dem Kühlerelement 14 (vgl. Fig. 2). Das Luftführungselement 12 ist rahmenartig ausgebildet und umschließt den Bereich zwischen Kühlerschutzgitter 18 und Kühlerelement 14. Es dient zum Leiten der von dem Kühlerschutzgitter 18 in Richtung L strömenden Luft zum Kühlerelement 14.

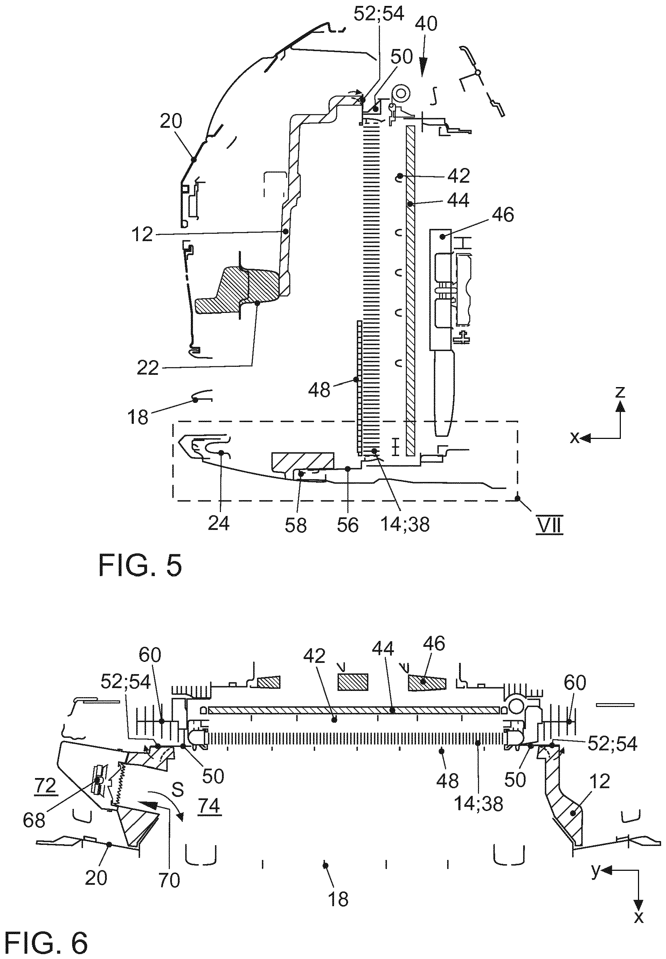

Eine Anordnung des Luftführungselementes 12 und des Kühlerelements 14 in dem Vorderwagen 16 ist in Fig. 2 in einer Ansicht von schräg vorne ohne Außenhautelement 20 dargestellt. Dabei ist ein Hauptstoßfängerquerträger 22 und ein in Fahrzeughochrichtung (z-Richtung) darunter angeordneter Fußgängerschutzquerträger 24 zu erkennen, welche in Fahrzeuglängsrichtung (x-Richtung) betrachtet unmittelbar hinter dem Kühlerschutzgitter 18 (vgl. Fig. 5) angeordnet sind. Der Hauptstoßfängerquerträger 22 ist über sich in Fahrzeuglängsrichtung (x-Richtung) nach hinten erstreckende Deformationselemente 26 mit Schottplatten 28 zur Anbindung an Längsträger (nicht dargestellt) verbunden. Der Fußgängerschutzquerträger 24 ist ebenfalls über Deformationselemente 30 an nicht dargestellten, unteren Plattenabschnitten der Schottplatten 28 angebunden. Üblicherweise sind das obere Deformationselement 26 und das untere Deformationselement 30 jeweils mit der dazugehörigen Schottplatte 28 verschweißt. Bei dem Hauptstoßfängerquerträger 22, dem Fußgängerschutzquerträger 24, den Deformationselementen 26, 30 und den Schottplatten 28 handelt es sich um karosseriefeste Bauteile, welche Teile des sogenannten Crash-Managementsystems sind.

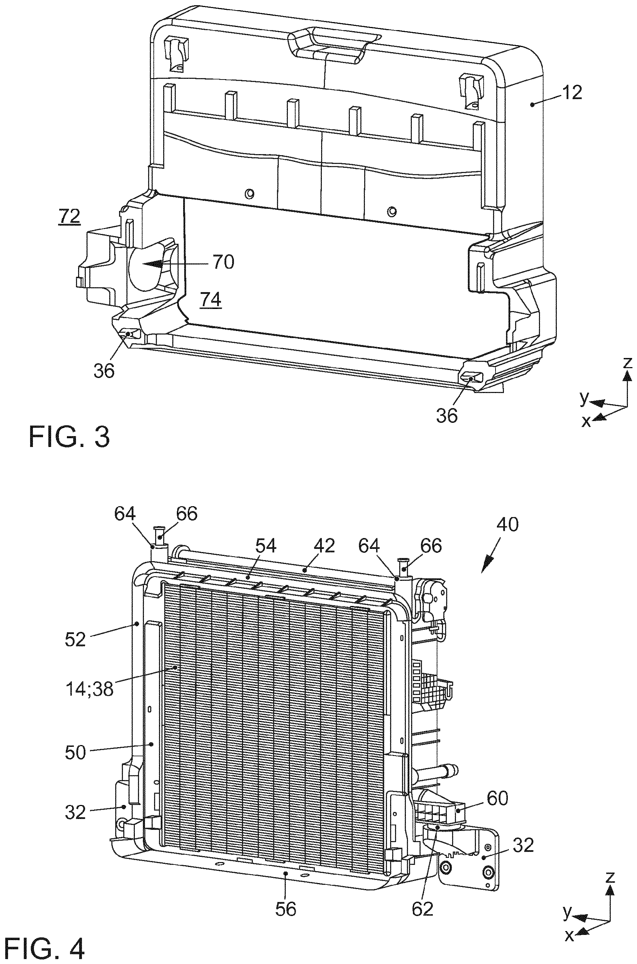

In den Figuren 2 und 4 ist eine Klimakühlerpaket-Lagerplatte 32 dargestellt, die bei der gezeigten Ausführungsform aus Kunststoff hergestellt ist. Eine solche Klimakühlerpaket-Lagerplatte 32 ist in Fahrzeuglängsrichtung jeweils hinter der Schottplatte 28 angeordnet und fest mit dieser verbunden. In der gezeigten Ausführungsform werden die beiden Klimakühlerpaket-Lagerplatten 32 (siehe Fig. 4) bei der Montage jeweils hinter der zugehörigen Schottplatte 28 verortet und daran angeschraubt. Die jeweilige Schottplatte 28 mit der daran befestigten Klimakühlerpaket-Lagerplatte 32 wird dann am unteren Hilfsrahmen des Kraftfahrzeuges (nicht dargestellt) angebunden. Die Klimakühlerpaket-Lagerplatte 32 gehört nicht zum Crash-Managementsystem.

Das Luftführungselement 12 erstreckt sich rahmenartig ausgehend von dem Hauptstoßfängerquerträger 22 in Fahrzeuglängsrichtung (x-Richtung) nach hinten bis zu dem Kühlerelement 14 und einem Schlossträger 34. Das Luftführungselement 12 ist fest mit dem Hauptstoßfängerquerträger 22 und dem Fußgängerschutzquerträger 24 verbunden. Zur Anbindung an den Fußgängerschutzquerträger 24 ist an einem unteren Abschnitt des Luftführungselementes 12 ein hervorragender Keil 36 ausgebildet. Die Anbindung an den Hauptstoßfängerquerträger 22 erfolgt mittels Schweißbolzen (nicht dargestellt). Das Luftführungselement 12 ist vorliegend einstückig aus Schaumstoff hergestellt.

Bei dem Kühlerelement 14 handelt es sich vorliegend um einen Wasserkühler 38, welcher Teil eines Klima-Kühlerpakets 40 ist. Wie in den Fig. 2 und 5-6 gut zu erkennen ist, weist das Klima-Kühlerpaket 40 den Wasserkühler 38, ein Kühlerrollo 42, einen Kondensator 44 und eine Lüfterhutze 46 auf. Zudem ist in Fahrzeuglängsrichtung (x-Richtung) vor dem Wasserkühler 38 ein Steinschutzelement 48 (vgl. Fig. 5) angeordnet.

Das Kühlerelement 14 weist in einem äußeren Teilabschnitt seines Umfangs einen Rahmen 50 auf, welcher sich vorliegend um den gesamten Umfang des Kühlerelements 14 erstreckt. Der Rahmen 50 ist mit dem Kühlerelement 14 verclipst. An dem Rahmen ist eine elastische Dichtung 52 mit einem ersten Dichtabschnitt 54 angeordnet. Die Dichtung 52 ist hier an den Rahmen 50 angespritzt. Der erste Dichtabschnitt 54 erstreckt sich vorliegend u-förmig an den beiden sich in Fahrzeughochrichtung (z-Richtung) erstreckenden Seiten und der Oberseite des Rahmens 50. Der erste Dichtabschnitt 54 ist in einem unbelasteten Zustand, d.h. in einer Vor-Montagelage vor einem Zusammenwirken mit dem Luftführungselement 12, teilweise in Fahrzeuglängsrichtung (x-Richtung) nach vorne und teilweise in Fahrzeughochrichtung (y-Richtung) orientiert.

Mit der Anordnung des Luftführungselementes 12 an dem Kühlerelement 14 wird der erste Dichtabschnitt 54 in eine gegenüber dem unbelasteten Zustand nach hinten gespannte Lage gebracht. Der Unterschied zwischen der Vor-Montagelage und der End-Montagelage ist in den Fig. 5, 6 und 9 mittels des Pfeils angedeutet. In der End-Monatelage ist der erste Dichtabschnitt 54 in Fahrzeughochrichtung (z-Richtung) orientiert und liegt in der gespannten Lage unmittelbar an dem Luftführungselement 12 an.

Zudem weist die Dichtung 50 einen zweiten Dichtabschnitt 56 auf, welcher vorliegend an der Unterseite des Rahmens angeordnet ist. Dieser zweite Dichtabschnitt 56 erstreckt sich hier weitestgehend waagerecht in Fahrzeuglängsrichtung (x-Richtung) nach vorne. In der Anordnung zusammen mit dem Luftführungselement 12 liegt das Luftführungselement 12 derart an dem zweiten Dichtabschnitt 54 an, dass dieser gegenüber einem weiteren Bauteil 58 zumindest kraftschlüssig fixiert ist.

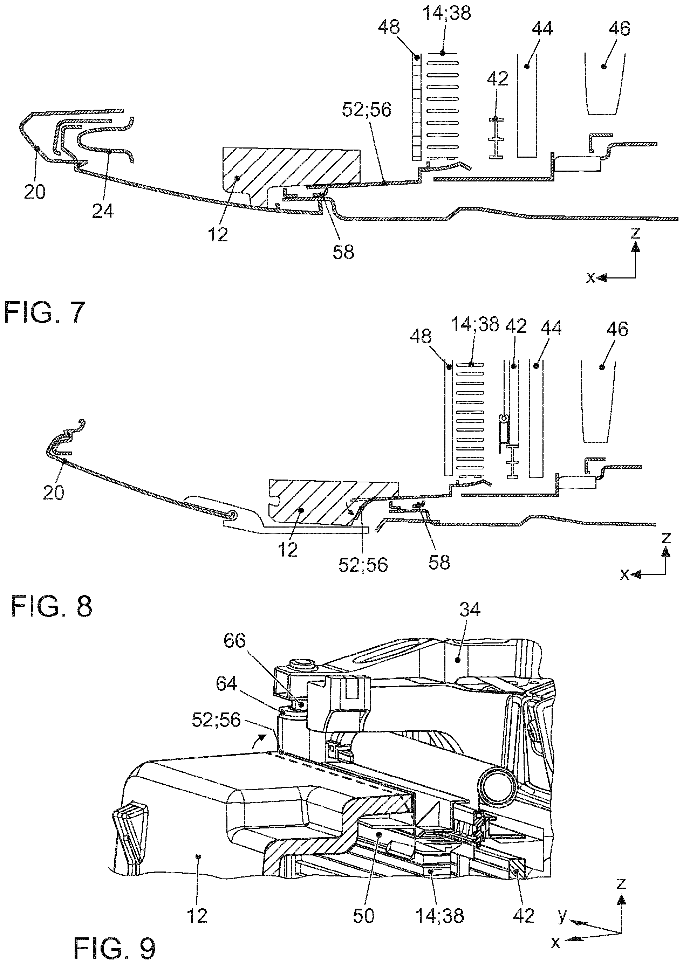

Dies ist im Detail in den Fig. 7 und 8 gezeigt. In Fig. 7 ist eine erste Ausführungsform gezeigt, wobei der Bauraum in dem Vorderwagen 16 derart ausgelegt ist, dass das der zweite Dichtabschnitt 56 von dem Luftführungselement 14 lediglich in Fahrzeughochrichtung (z-Richtung) nach unten gegen das weitere Bauteil 58, hier ein Unterbodenblech, gedrückt und dadurch kraftschlüssig fixiert wird. In der zweiten in Fig. 8 gezeigten Ausführungsform steht ein geringerer Bauraum in dem Vorderwagen 16 zur Verfügung und das Luftführungselement 12 liegt mit seiner Unterseite näher an dem Kühlerelement 14 an. In diesem Fall wird der zweite Dichtabschnitt 56 neben einer kraftschlüssigen Fixierung gegenüber dem weiteren Bauteil 56 (einem Unterbodenblech) zudem teilweise nach hinten gespannt, was durch den Pfeil angedeutet ist.

Neben einer guten Abdichtung durch die Spannung des ersten Dichtabschnitts 54 wird zudem eine Schwingungsentkopplung des Kühlerelements 14 und des Luftführungselementes 12 erzielt. Das Kühlerelement 14 ist zudem selbst schwingungsentkoppelt von karosseriefesten Bauteilen in dem Vorderwagen 16 gelagert. Dazu weist das Kühlerelement 14 sich in Fahrzeugquerrichtung (y-Richtung) jeweils nach außen erstreckende Ausleger 60 mit sich an diesen in Fahrzeughochrichtung nach unten erstreckenden Einsteckabschnitten (nicht erkennbar) zum Einstecken in eine korrespondierende Öffnung der Klimakühlerpaket-Lagerplatte 32 auf (vgl. Fig. 4). Zur Schwingungsentkopplung ist zwischen den Einsteckabschnitten und der Klimakühlerpaket-Lagerplatte 32 ein schwingungsdämpfendes Elastomer-Material 62 angeordnet. In dem gezeigten Ausführungsbeispiel ist das Elastomer-Material 62 in der jeweiligen Öffnung der Klimakühlerpaket-Lagerplatte 32 vorgesehen. Die Fixierung der Einsteckabschnitte gegenüber der Klimakühlerpaket-Lagerplatte 32 erfolgt in der gezeigten Ausführungsform über nicht dargestellte Stifte, die von unten durch die Öffnungen der Klimakühlerpaket-Lagerplatte 32 geführt und fest mit den Einsteckabschnitten verbunden werden, z.B. durch Verclipsen. Analog dazu erfolgt eine schwingungsentkoppelte Lagerung im oberen Bereich des Kühlerelements 14 über von Elastomerelementen 64 aufgenommene Stifte 66, welche mit dem Schlossträger 34 verbunden sind, beispielsweise durch Verclipsen (vgl. Fig. 4).

In dem Vorderwagen 16 ist zusätzlich ein Schallerzeuger 68 angeordnet (vgl. Fig. 2 und Fig. 6). Der Schallerzeuger 68 ist in Fahrzeugquerrichtung (y-Richtung) außenseitig des Luftführungselementes 12 angeordnet, wobei das Luftführungselement 12 eine das Luftführungselement 12 durchragende Öffnung 70 aufweist, die sich von einem außenseitigen Bereich 72 bis zu einem innenseitigen Bereich 74 des Luftführungselementes 12 erstreckt. Durch die Öffnung 70 wird von dem Schallerzeuger 68 emittierter Schall in Richtung der Mitte des Vorderwagens 16 geleitet. Zusätzlich ist die Öffnung 70 derart ausgerichtet, dass der Schall zumindest teilweise in Fahrzeuglängsrichtung (x-Richtung) entlang des Pfeils S (vgl. Fig. 6) nach vorne emittiert wird. Die Öffnung weitet sich trichterförmig von dem außenseitigen Bereich 72 zu dem innenseitigen Bereich 74 auf. Der Schallerzeuger 68 liegt derart dichtend an dem Luftführungselement 12 an, dass möglichst der gesamte Schall durch die Öffnung 70 geleitet wird.

Wie in Fig. 6 gut erkennbar ist, sind der Schallerzeuger 68 und das Kühlerelement 14 in Fahrzeugquerrichtung (y-Richtung) betrachtet derart nebeneinander angeordnet, dass diese bei einer Relativbewegung in Fahrzeuglängsrichtung (x-Richtung), beispielsweise verursacht durch einen Crash, aneinander vorbeigleiten können und insbesondere das Kühlerelement 14 nicht beschädigt wird.

### Bezugszeichenliste

- 10: Kraftfahrzeug
- 12: Luftführungselement
- 14: Kühlerelement
- 16: Vorderwagen
- 18: Kühlerschutzgitter
- 20: Außenhaut
- 22: Hauptstoßfängerquerträger
- 24: Fußgängerschutzquerträger
- 26: Deformationselement
- 28: Schottplatte
- 30: Deformationselement
- 32: Klimakühlerpaket-Lagerplatte
- 34: Schlossträger
- 36: Keil
- 38: Wasserkühler
- 40: Klima-Kühlerpaket
- 42: Kühlerrollo
- 44: Kondensator
- 46: Lüfterhutze
- 48: Steinschutzelement
- 50: Rahmen
- 52: Dichtung
- 54: erster Dichtabschnitt
- 56: zweiter Dichtabschnitt
- 58: weiteres Bauteil
- 60: Ausleger
- 62: Elastomer
- 64: Elastomer
- 66: Stift
- 68: Schallerzeuger
- 70: Öffnung
- 72: außenseitiger Bereich des Luftführungselementes
- 74: innenseitiger Bereich des Luftführungselementes

## Patentansprüche

1. Anordnung eines Luftführungselementes (12) aus Schaumstoff an einem Kühlerelement (14) in einem Vorderwagen (16) eines Kraftfahrzeuges (10),
**dadurch gekennzeichnet,**
**dass** sich das Luftführungselement (12) in Fahrzeuglängsrichtung betrachtet bis zu dem Kühlerelement (14) erstreckt und dass das Kühlerelement (14) mindestens in einem äußeren Teilabschnitt eine elastische Dichtung (52) mit einem ersten Dichtabschnitt (54) aufweist, wobei das Luftführungselement (12) derart an dem ersten Dichtabschnitt (54) anliegt, dass der erste Dichtabschnitt (54) durch das Luftführungselement (12) in Fahrzeuglängsrichtung betrachtet in eine nach hinten gespannte Lage gebracht ist.

2. Anordnung nach dem vorstehenden Anspruch, **dadurch gekennzeichnet, dass** das Kühlerelement (14) einen weiteren Teilabschnitt mit einer zweiten Dichtung oder einem zweiten Dichtabschnitt (56) aufweist und das Luftführungselement (12) derart an der zweiten Dichtung oder dem zweiten Dichtabschnitt (56) anliegt, dass die zweite Dichtung oder der zweite Dichtabschnitt (56) gegenüber einem weiteren Bauteil (58) mindestens kraftschlüssig fixiert ist.

3. Anordnung nach einem der vorstehenden Ansprüche, **dadurch gekennzeichnet, dass** das Kühlerelement (14) schwingungsentkoppelt von karosseriefesten Bauteilen (12, 22, 24, 26, 28, 30, 32, 34) in dem Vorderwagen (16) gelagert ist.

4. Anordnung nach einem der vorstehenden Ansprüche, **dadurch gekennzeichnet, dass** in dem Vorderwagen (16) ein Schallerzeuger (68) angeordnet ist und in dem Luftführungselement (12) eine das Luftführungselement (12) durchragende Öffnung (70) ausgebildet ist, wobei sich die Öffnung (70) derart unmittelbar an den Schallerzeuger (68) anschließt, dass sich Schall von einem außenseitigen Bereich (72) des Luftführungselementes (12) in einen innenseitigen Bereich (74) des Luftführungselementes (12) ausbreiten kann.

5. Anordnung nach Anspruch 4, **dadurch gekennzeichnet, dass** der
Schallerzeuger (68) und/oder die Öffnung (70) derart angeordnet und/oder ausgebildet sind, dass der Schall zumindest teilweise in Fahrzeuglängsrichtung nach vorne aus der Öffnung (70) emittiert wird und/oder dass die Öffnung (70) trichterförmig ausgebildet ist.

6. Anordnung nach einem der Ansprüche 4 bis 5, **dadurch gekennzeichnet,**
**dass** der Schallerzeuger (68) derart dichtend gegenüber dem Luftführungselement (12) angeordnet ist, dass der Schall vollständig oder weitestgehend durch die Öffnung (70) emittiert wird.

7. Anordnung nach einem der Ansprüche 4 bis 6, **dadurch gekennzeichnet, dass**
der Schallerzeuger (68) und das Kühlerelement (14), in Fahrzeuglängsrichtung betrachtet, in Fahrzeugquerrichtung überschneidungsfrei nebeneinander angeordnet sind.

## Claims

1. Arrangement of an air guide element (12) made of foam on a cooler element (14) in a front end (16) of a motor vehicle (10),
**characterized in**
**that,** when viewed in the longitudinal direction of the vehicle, the air guide element (12) extends up to the cooler element (14) and in that the cooler element (14) has, at least in an outer partial portion, a resilient seal (52) having a first sealing portion (54), the air guide element (12) resting against the first sealing portion (54) such that the first sealing portion (54) is brought into a rearwardly tensioned position by the air guide element (12) when viewed in the longitudinal direction of the vehicle.

2. Arrangement according to the preceding claim, **characterized in that** the cooler element (14) has a further partial portion having a second seal or a second sealing portion (56), and the air guide element (12) rests against the second seal or the second sealing portion (56) such that the second seal or the second sealing portion (56) is fixed at least in a frictional manner with respect to a further component (58).

3. Arrangement according to either of the preceding claims,
**characterized in that** the cooler element (14) is mounted in the front end (16) so as to be vibration-decoupled from components (12, 22, 24, 26, 28, 30, 32, 34) fixed to the body.

4. Arrangement according to any of the preceding claims,
**characterized in that** a sound generator (68) is arranged in the front end (16) and an opening (70) projecting through the air guide element (12) is formed in the air guide element (12), the opening (70) directly adjoining the sound generator (68) such that sound can propagate from an outer region (72) of the air guide element (12) into an inner region (74) of the air guide element (12).

5. Arrangement according to claim 4,
**characterized in that** the sound generator (68) and/or the opening (70) are arranged and/or formed such that the sound is at least partially emitted forward out of the opening (70) in the longitudinal direction of the vehicle and/or **in that** the opening (70) is funnel-shaped.

6. Arrangement according to any of claims 4 to 5,
**characterized in that** the sound generator (68) is sealingly arranged with respect to the air guide element (12) such that the sound is emitted completely or largely through the opening (70).

7. Arrangement according to any of claims 4 to 6,
**characterized in that** the sound generator (68) and the cooler element (14), when viewed in the longitudinal direction of the vehicle, are arranged next to one another without overlap in the transverse direction of the vehicle.

## Revendications

1. Agencement d'un élément de guidage d'air (12) en mousse sur un élément de refroidisseur (14) dans un train avant (16) d'un véhicule automobile (10),
**caractérisé en ce que**,
l'élément de guidage d'air (12), observé dans la direction longitudinale de véhicule, s'étend jusqu'à l'élément de refroidisseur (14) et que l'élément de refroidisseur (14) présente au moins dans une section partielle externe un joint élastique (52) avec une première section d'étanchéité (54), dans lequel l'élément de guidage d'air (12) repose sur la première section d'étanchéité (54) de sorte que la première section d'étanchéité (54) soit amenée par l'élément de guidage d'air (12), observée dans la direction longitudinale de véhicule, dans une position tendue vers l'arrière.

2. Agencement selon la revendication précédente, **caractérisé en ce que** l'élément de refroidisseur (14) présente une autre section partielle avec un second joint ou une seconde section d'étanchéité (56) et l'élément de guidage d'air (12) repose sur le second joint ou la seconde section d'étanchéité (56) de telle sorte que le second joint ou la section d'étanchéité (56) soit fixée au moins par coopération de force contre un autre composant (58).

3. Agencement selon l'une quelconque des revendications précédentes, **caractérisé en ce que** l'élément de refroidisseur (14) est placé découplé vis-à-vis des vibrations des composants solidaires de la carrosserie (12, 22, 24, 26, 28, 30, 32, 34) dans le train avant (16).

4. Agencement selon l'une quelconque des revendications précédentes, **caractérisé en ce qu'**un générateur acoustique (68) est agencé dans le train avant (16) et une ouverture (70) traversant l'élément de guidage d'air (12) est formée dans l'élément de guidage d'air (12), dans lequel l'ouverture (70) se raccorde directement au générateur acoustique (68) de telle sorte que le son provenant d'une zone côté externe (72) de l'élément de guidage d'air (12) puisse se propager dans une zone côté interne (74) de l'élément de guidage d'air (12).

5. Agencement selon la revendication 4,
**caractérisé en ce que** le générateur acoustique (68) et/ou l'ouverture (70) sont agencés et/ou formés de sorte que le son soit émis au moins partiellement dans la direction longitudinale de véhicule vers l'avant à partir de l'ouverture (70) et/ou que l'ouverture (70) présente une forme d'entonnoir.

6. Agencement selon l'une quelconque des revendications 4 à 5,
**caractérisé en ce que** le générateur acoustique (68) est agencé de manière étanche par rapport à l'élément de guidage d'air (12) de sorte que le son soit émis totalement ou dans une grande mesure à travers l'ouverture (70).

7. Agencement selon l'une quelconque des revendications 4 à 6,
**caractérisé en ce que** le générateur acoustique (68) et l'élément de refroidisseur (14), observés dans la direction longitudinale de véhicule, sont agencés l'un à côté de l'autre dans la direction transversale de véhicule sans chevauchement.
